# EUROPEAN PATENT SPECIFICATION

(11) **EP 2 656 571 B1**
(45) Date of publication and mention of the grant of the patent: **23.05.2018**
(21) Application number: 10795389.5
(22) Date of filing: 21.12.2010
(51) Int. Cl.: G06F 8/61, H04L 29/06, H04L 29/08

(54) **DELIVERY AND EXECUTION OF LOGIC IN USER TERMINAL IN IMS SESSION**
ÜBERBRINGUNG UND AUSFÜHRUNG VON LOGIK IN BENUTZERGERÄT IN EINER IMS SITZUNG
LIVRAISON ET EXÉCUTION D'UN LOGICIEL DANS UN TERMINAL D'UTILISATEUR D'UNE SESSION D'IMS

(43) Date of publication of application: 30.10.2013
(73) Proprietor: Telefonaktiebolaget LM Ericsson (publ), 164 83 Stockholm (SE)
(72) Inventor: BALDWIN, John, Coventry, Warwickshire CV3 2XA (GB); PRZYBYSZ, Hubert, S-126 37 Hägersten (SE)
(74) Representative: Ericsson
(86) International application number: PCT/EP2010/070396
(87) International publication number: WO 2012/084018

(56) References cited:
- WO-A1-01/47213
- WO-A1-2006/132573
- WO-A1-2008/110188
- WO-A1-2008/154953
- US-B1- 7 050 861

## Description

### Technical Field

The present invention relates to telecommunications using the IP Multimedia Subsystem, IMS, and more particularly to the provision and use of executable logic in user equipment during an IMS call/session.

### Background

The IP Multimedia Subsystem (IMS) is the technology defined by the Third Generation Partnership Project (3GPP) to provide IP Multimedia services over mobile communication networks. IP Multimedia services provide a dynamic combination of voice, video, messaging, data, etc. within the same session. The IMS is defined in the 3GPP Specification 23.228.

In the IMS, control of communications occurs at three layers (or planes): the Connectivity Layer, also referred to as the bearer, or traffic plane and through which signals are directed to/from user terminals accessing the network; the Control Layer and the Application Layer. Access to the IMS by IMS subscribers is performed through an IP-Connectivity Access Network (IP-CAN). The IMS includes a core network, which operates over the Control Layer and the Connectivity Layer, and a service network. The Application Layer includes the IMS service network with Application Servers (ASs) for implementing IMS service functionality and providing services to end-users on a session-by-session basis.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session.

Access to Internet content is also widely available on many User Equipment (UE) terminals including mobile devices. This is predominantly done with the use of a web browser on the terminal. However, the opportunities exist to build more advanced applications/services that combine internet content and services with mobile telephony services, particularly as telephony services move towards an all-IP architecture based on the IMS. These more advanced applications/services will require application logic to be executed in the UE during a session, even if it is simple logic such as retrieving some data from the Internet. Whilst it is well specified how to execute application logic in a web browser session, it is not so well specified how to execute application logic within the context of an IMS telephony session.

Before considering application logic execution in the context of IMS telephony sessions in more detail, it is worthwhile to briefly review the other technologies that affect this.

The IMS provides a generic telecommunications infrastructure that can support voice and multimedia telephony applications such as MMTel and Presence. The IMS is also at the core of the VoLTE (Voice over LTE) work being driven by GSM Association that will deliver voice services over LTE (Long Term Evolution) radio access. IMS requires terminal support and this is also being driven as part of the VoLTE work. It is desirable to be able to run new applications in the terminal that build upon (or integrate with) the basic IMS applications such as MMTel and Presence. There are different options for implementing IMS related applications within the terminal, including embedding a downloadable application and integrating the application into the browser environment.

A general background to application development environments is given below.

Most mobile phones include some form of Application Program Interface (API) and development environment, which allows the capabilities of the device to be extended and/or enriched. Examples of APIs are: Symbian / C++; Android / Java; IPhone / Objective C. Such APIs allow the application to be optimized for the particular device but are usually specific to a particular device or operating system, which is inconvenient for developers who have to implement numerous variants of the application to account for different devices/operating systems.

The latest web browsers on PCs and smartphones provide more than a simple browser in that they include an execution environment with well-defined APIs, enabling web application development. Three key components of web page development are: HTML (version 4, and moving towards version 5) that defines the structure of the web page; CSS, defining the detailed formatting and presentation; and JavaScript providing the dynamic behavior. The browser uses these three core browser technologies to render the web page and together they are referred to as Web Runtime. Note that, the expression "runtime", as would be readily understood by the skilled person in the art and as used here and elsewhere in this document, refers to the concept of an installation of software or a computer program, irrespective of whether the software/program is actually running or not. A key feature of Web Runtime is that it is independent of the device and operating system and that it supports loading of content/logic from the Internet as needed.

JavaScript is an interpreted programming language widely used in web page development. JavaScript is used in the form of client-side scripts executed as part of a web browser in order to provide enhanced user interfaces and dynamic web pages. An HTML web page may either include JavaScript fragments directly, or may have links to separate JavaScript files to be downloaded. The browser includes a JavaScript execution environment which implements the dynamic execution of the web page. Executing the JavaScript in the web browser provides APIs to access features such as the Document Object Model (DOM) of the web page and even some hardware of the host terminal/PC, e.g. microphone. The JavaScript execution environment is strictly controlled by the browser and there are tight security constraints on the JavaScript capabilities such as: JavaScript cannot access the local file system of the host terminal/PC; The JavaScript must be loaded from the same site as the original HTML page; JavaScript can make HTTP requests back to the web server (AJAX), but cannot establish other IP communications. Overall Javascript provides a very rich and secure web programming environment.

The Web Runtime combination has spawned an offshoot technology called Web Widgets. These are standalone applications developed using HTML, CSS & JavaScript that can be installed on a UE. A typical example is a weather widget that periodically retrieves local weather information from a web server and provides a summary that is continually visible to the user. Web Widget technology is also available on smartphone devices and this helps to provide a common environment for application development, albeit within the restrictions of the JavaScript execution environment.

Initially the use of HTML, CSS & JavaScript on mobile terminals focused on web browser and web widget environments. There has been very little support to integrate this web environment with the other features of the mobile phone environment such as address book, call history log etc. The JIL (Joint Innovation Lab) initiative aimed to address this limitation and provide JavaScript APIs to many of the terminal's internal features. The JavaScript language plus the browser/widget execution environment plus the new JIL APIs provide a rich execution environment for mobile applications. This environment is now being promoted via the Wholesale Application Community (WAC), which is a community of many of the world's mobile telecommunications operators.

The JIL specification provides Javascript APIs for device Information such as: ACCOUNT Info; POSITION info; DEVICESTATE Info; and DATANETWORK Info: and for Applications such as: ALARM; FILES; BROWSER; GAMES; CALCULATOR; MAIL 72; CALENDAR; MEDIAPLAYER; CAMERA; MESSAGING; CONTACTS; PHONECALL; CALL RECORD; and TELEPHONY.

Within the JIL Telephony API there is an *onCallEvent* that is used to register application logic that is to be executed when a telephony call is initiated. The *onCallEvent* applies at both the originating and at the terminating terminals and acts as a trigger for application logic. However, it is limited by the fact that the application logic and the trigger must be pre-installed in the terminal.

The Web Hypertext Application Technology Working Group (WHATWG) is working to specify real-time communication APIs for the core browser engine. This is likely to result in some Javascript APIs being provided into these real-time communications capabilities. This opens up possibilities for new applications that execute in the browser Web Runtime environment. These applications may be related to a real-time communication session and the users involved in the session.

The APIs available for developers today tend to be either operating system dependent or based upon widget engines that use the browser Web Runtime. In either case the applications have to be pre-installed into the device. This means they are not compatible with the real-time person-person communication sessions established using IMS, because they rely upon the application being pre-installed by the user. In other words, to be useful for a real-time communication session, an application would have to be pre-installed in all the devices of the users involved in the communication session. But it is impossible for the application running in one device to know what applications/APIs are present on the devices of the other users in the session. This has held back the use and development of applications for enriching the real-time person-person communication session, and has limited the innovation that is possible on top of the IMS telephony session layer.

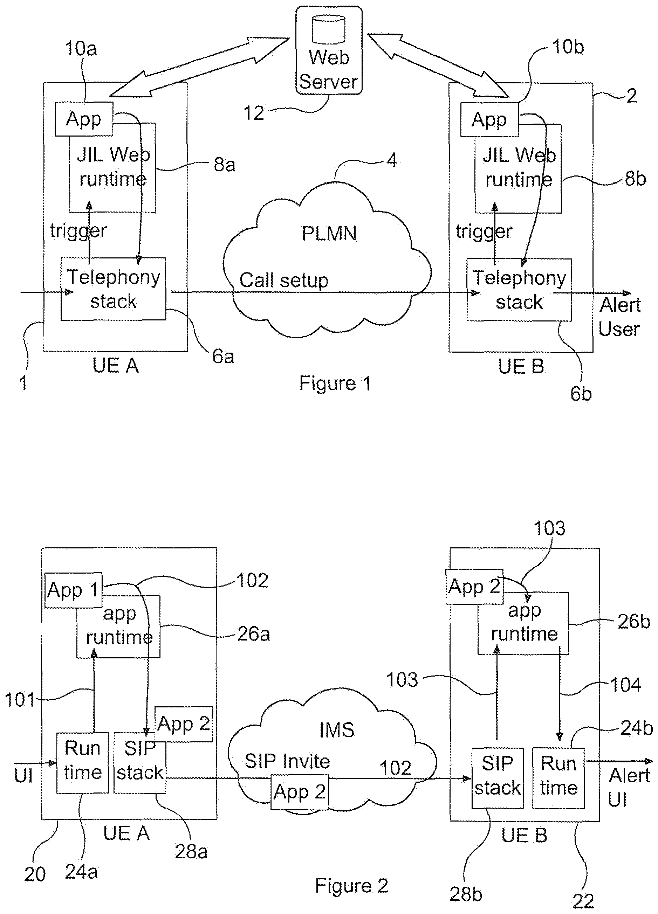

The JIL/WAC initiative has attempted to add a layer to support innovation, but does not address the problems that arise where the required applications are not installed in the devices of other users. An example of this limitation is shown in Figure 1 and described below for the JIL/WAC telephony event model.

As shown in Figure 1, UE A 1 is calling UE B 2 via a Public Land Mobile Network, PLMN 4. UE A 1 has a Telephony stack 6a and is configured with a JIL Web Runtime module 8a for executing a pre-installed Application 10a. Similarly, UE B has a Telephony stack 6b and is configured with a JIL Web Runtime module 8b for executing the Application 10b, which again is pre-installed. Both UE A 10 and UE B 12 have access to a web server 12.

The JIL Telephony API tries to provide an application interface for handling basic telephony. The JIL Telephony event state model is based upon the following procedure.

Prior to Call setup the Application 10a, 10b is pre-installed in both UE A 1 and UE B 2 and has its own User Interface (Ul). The application invokes the Telephony.Widget API to 'register' a callback function to be executed when a call occurs.

During Call setup, when the call arrives the callback function is executed carrying out actions such as: Update app UI; Read from Web server 12; Invoke other JIL APIs.

However, to realize the benefits of this Telephony API, both the telephony API and the other JIL APIs invoked must be pre-installed in both UE A 1 and UE B 2. Thus if either UE does not have the application or the other JIL APIs installed, the application will not be able to function.

One possible solution to this problem would be to co-ordinate the installation of applications into the devices involved in a real-time communication IMS session. This could be done by sending a web link (URL) to the UEs out-of-band of the IMS session.

The web link would refer to some code (JavaScript) to be executed on the device(s) of the parties involved in the IMS session. However, the problems with this approach are:
i) This is not an automatic procedure in that it requires the users to accept the link and click on it. In this regard it is similar to pre-arranging to download/install an application. Depending on the caching ability of the phone and its web browser the users may have to do this each time they wish to use the application;
ii) Since the procedure is out-of-band of the IMS session, it is not clear how the UI will behave, particularly if the IMS session is part of a VoLTE session where the IMS client becomes the default dialer.
iii) If the application serves the users of an IMS session then it is desirable that the installation/execution of the application is closely integrated with the IMS session, but this is not the case if the procedure is out-of-band of the IMS session.

WO2006/132573 A1 discloses a method for distributing an address to an end-user to allow the end-user to download a specific SIP based service that they otherwise would not have access to.

US7050861 B2 discloses a method of sending a SIP message to a SIP client with an associated software code. The SIP client is arranged to execute the associated software code when the message is received.

WO2008/154953 A1 discloses arrangements and methods for providing updated information to a web server. The method involves receiving a first telephone signaling message that comprises an address to a web page and mapping the address to an executable code received by a second telephone message.

WO0147213 A1 discloses a method of sending a SIP message comprising computer software code in the SIP message body, such that on receipt of the SIP message by a client the code is executed.

WO2008/110188 A1 discloses a mechanism whereby a first communication device sends a message to a second communication device comprising a link to allow an application to be downloaded. Information is sent back to the first communication device detailing whether or not the second communication device has activated the received link and downloaded the application.

### Summary

Currently, as exemplified by the JIL Telephony API described above, the application has to be installed prior to call set up. This limitation makes it difficult to build an application that serves both parties in the telephone call/IMS session, because it is difficult to be sure that both parties have the application installed on their devices. The mechanisms described herein provide solutions to these problems by installing the program logic of an application dynamically, or automatically, during an IMS session.

The proposed solutions may be considered in terms of three mechanisms:
i) a mechanism to allow an executable script or program logic (or a link to program logic) to be delivered as part of an IMS session to a remote UE;
ii) a mechanism to trigger the loading and execution of the program logic in the UE, where the trigger for the loading and execution may occur as a result of events/signaling within an IMS session; and
iii) a mechanism to allow the dynamically loaded program logic to interact with the terminal, such as having controlled access to the UI.

Preferably, the logic that is dynamically loaded executes within a well-defined execution environment, such as those defined for JIL/WAC or the WHATWG Browser runtime initiative. In other words, a new way is proposed to deliver the executable program logic, so that one IMS terminal (UE) has the ability to trigger execution of logic in a controlled way within another IMS terminal (UE). It is an advantage that the limitations currently placed on use of applications, where applications have to be pre-installed, are removed. This opens new possibilities for applications development.

These mechanisms are most suitable for application environments that are independent of the device and operating system, such as Web Runtime, although it is also possible that use in other environments could be supported together with techniques such as dynamic link libraries (DLLs).

An alternative way of considering the proposed solution is that the JIL or WHATWG model is being extended to allow applications to be installed dynamically during real-time communication sessions. The API is extended to include actually delivering an application (e.g. Javascript) or a link to an application to the remote terminal.

According to a first aspect, there is provided a method of providing application program logic from a first UE to a second UE communicating with each other in a call/session over an IMS network. A first application is executed in the first UE to generate program logic or a link to the program logic, which program logic includes a second application. The generated program logic, or link to program logic, is sent to the second UE. The method further includes sending a trigger to the second UE to install and execute the program logic. The generated program logic and/or the trigger may be sent to the second UE in one or more SIP messages.

The first UE may generate the program logic by retrieving program script and/or data from a remote server.

The generated program logic and/or the trigger may be sent to the second UE during session setup, or at any stage after session set-up. The program logic and/or the trigger may be sent from the first UE to a plurality of second UEs all communicating in the IMS session.

According to a second aspect there is provided a method of running an application in a UE communicating in a call/session over an IMS network. A signal that includes program logic, or a link to program logic of the application is received. The UE installs the program logic in the UE, or follows the link to download and install the program logic in the UE. The program logic is executed to run the application.

Executing the program logic may include interacting with existing capabilities of the UE, for example accessing one or more APIs installed in the UE. The APIs accessed may include one or more of: an API for controlling a UI of the UE; a SIP API for accessing information about the call/session; and a WEB API for accessing the internet.

According to another aspect there is provided a UE configured for participating in a call/session via an IMS network. The UE has an IMS client and an application runtime module that executes a first application to generate program logic, or a link to program logic, which includes a second application. The IMS client is configured to send the generated program logic/link to program logic to another UE.

The application runtime module may be further configured to retrieve program script and/or data from a remote server when generating the program logic.

According to another aspect there is provided a UE configured for participating in a call/session via an IMS network. The UE includes an application runtime module and an IMS client. On receiving a signal that includes program logic, or a link to program logic of an application, the UE is configured to install the program logic in the runtime module, or to follow the link so as to download and install the program logic in the runtime module, and to execute the program logic as an application.

The UE may include one or more APIs installed therein, which can be accessed by the application when the program logic is executed.

### Brief Description of the Drawings

Figure 1 is a block diagram showing schematically the signaling between UEs for use of a known JIL telephony API.
Figure 2 is a block diagram showing schematically the signaling between UEs in one embodiment for providing, installing and executing an application in a SIP session.
Figure 3 is a block diagram showing schematically the signaling between UEs in another embodiment for providing, installing and executing an application in a SIP session.
Figure 4 is a schematic illustration of the processing environment in which an application executes.
Figure 5 is an illustration of GUIs on a pair of mobile terminals executing an application.
Figure 6 is a flow diagram illustrating the steps in a method of providing application program logic to a UE.
Figure 7 is a flow diagram illustrating the method steps in a method of installing and executing an application in a UE.

Figure 2 illustrates schematically signaling between UEs, UE A 20 of user A and UE B 22 of user B, in accordance with one embodiment. The functional components of the IMS client in UE A 20 include a runtime component 24a, application runtime 26a and the SIP stack 28a. Similarly, the IMS client in UE B 22 has runtime component 24b, application runtime 26a and SIP stack 28a. The details of the UE architecture are not important except in that an application runtime 26a, 26b exists in the IMS client.

The sequence shown in figure 2 will be described in terms of 4 key steps. It is noted that this example shows these in the forward direction of the session based upon a SIP INVITE being sent from UE A 20 to UE B 22. However the principles can apply equally in the opposite direction of the call, whereby UE B 22 initiates the transfer of application logic to UE A 20. Also, the steps may apply at any stage during a SIP session, and in association with any SIP message, not necessarily an INVITE.

The first key step 101 is the creation of the application program logic in UE A 20. In this case this is done by execution of a pre-installed application, App1, in the application runtime 26a of UE A 20. This may occur, for example, using triggers provided on session setup, for example as in JIL described above, or at any stage during a session. App1 is already installed and registered with the IMS client of UE A 20, which means that the IMS client knows that the App1 program logic must be executed at the appropriate stage. The execution of App1 may result directly in the generation of application program logic for an application App2, or it may result in the generation of a link (e.g. a URL) to program logic for App2. The program logic of App1 does not need to be very substantial, and could, for example, simply comprise instructions to follow a link to download the program logic of App2.

In the second key step, 102, this generated program logic or link is provided to the SIP stack 28a of UE A 20, packaged and delivered to the remote terminal as part of the IMS session (i.e. using SIP). The logic (or link to program logic) is delivered in-band as part of the IMS session signaling. UE B 22 receives the program logic (or link to program logic) as part of the IMS session.

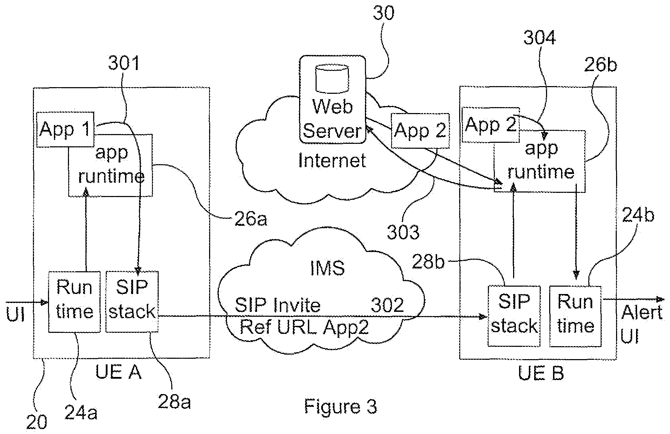

In the third key step, 103, UE B installs the program logic into an execution environment (application runtime 26b). If the program logic has been provided directly, UE B can simply execute this (in the form of App2 in Figure 2). If instead a link to the program logic has been provided, UE B 22 follows the link to download the program logic first (not shown in Figure 2, but see Figure 3, described below). The installation at step 103 may be triggered by a signal sent from UE A (or from elsewhere in the IMS, such as from an Application Server) using SIP signaling.

In the fourth key step the installed program logic, App2, is executed in UE B 22 and interacts with other features/functions in the terminal environment of UE B 22. The functional capabilities of UE B 22 are accessible to the executing program logic using APIs in the runtime 24b (i.e. the execution environment) of the IMS client of UE B 22.

Figure 3 illustrates the alternative case, where instead of sending the program logic of App2 to UE B 22, UE A 20 sends a URL link to App2, which is stored on a remote server, such as Web Server 30. Thus, at step 301 a URL to App2 is 'generated' by the already installed App1 on UE A 20. The App2 URL is delivered as part of the SIP signaling to UE B 22 (step 302). At step 303, the application runtime 26b in UE B 22 retrieves the App2 logic from the Web Server 30, and at step 304 this is then loaded and executed by the application runtime 26b.

In the mechanisms described above the App2 program logic or URL is generated by the execution of App1. However, there may be several ways to do this, including the possibility that App1 retrieves the logic for App2 from a remote Server.

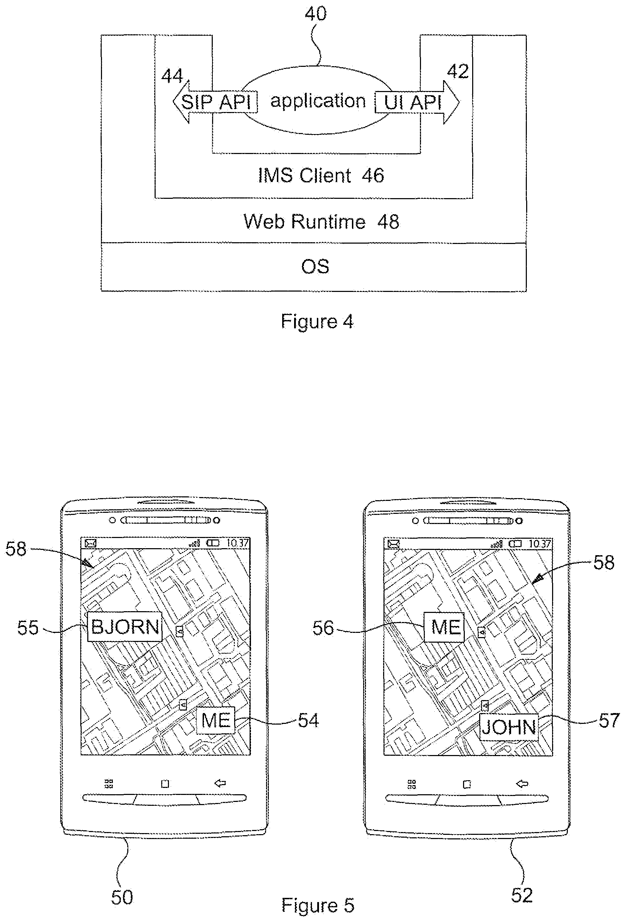

Figure 4 is a schematic illustration showing an example of an execution environment for the application program logic in UE B 22. The application 40 has access to a number of well-defined APIs such as the UI API 42 to access the UI and the SIP API 44 to access information about the communication session, but these are constrained by the policy of the IMS client 46 and/or web runtime 48. In addition the application 40 can access the internet by way of a WEB API (not shown). As shown in Figure 4, the APIs may be provided to the application 40 via the UE's IMS client 46. However, this is not essential and the application 40 may have access to APIs that are not provided by the IMS client 46. For example, the application 40 may have access to IMS APIs via the IMS client 46 and to other phone APIs (e.g. the basic Android API in an Android phone) that are not provided by the IMS client 46.

Figure 5 illustrates displays on a pair of mobile terminals 50, 52 for an example of a Usage - Location Service application. In this example, John is the user of terminal 50, while Bjorn is the user of terminal 52. John and Bjorn are communicating in a session, and as part of traditional telephony call setup, they have exchanged identity information - i.e. the called party knows who is calling and the calling party knows who they are connected to. The terminals will usually display these Calling and Connected Line Identities. However, in this case, an enrichment of this service includes location information of the calling and called parties, which are presented as display markers 54, 55, 56, 57 on a digital map 58.

In this example service the terminals 50, 52 receive user location information as part of the communication session setup signaling, and then invoke a web service to obtain a digital map with markers representing the two (or more) parties in the session. This requires an application to run on each of the terminals 50, 52 that are involved in the real-time communication session.

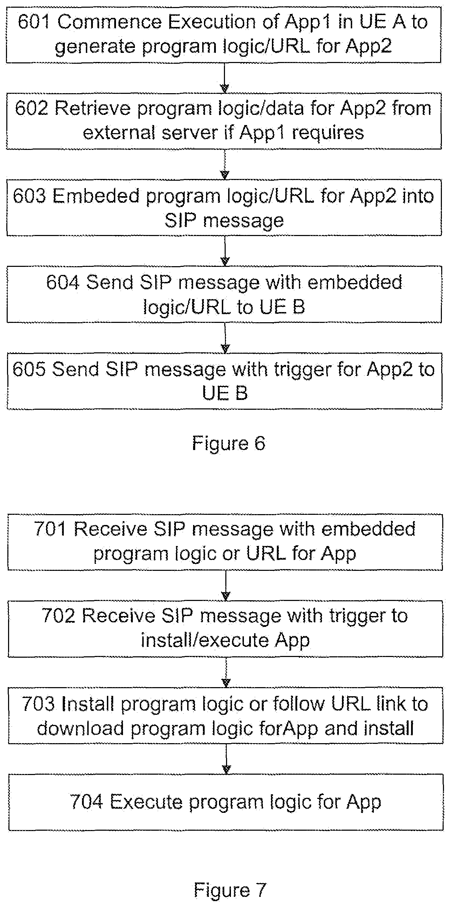

Figure 6 is a flow diagram illustrating the steps in the method of providing application program logic from a first UE, UE A to a second UE, UE B, that are communicating with each other in a call/session over an IMS network. In step 601 UE A executes a pre-installed first application App1 to generate program logic, or a link to the program logic of a second application, App2. At step 602, if required by the program logic of App1, UE A retrieves program logic and/or data relating to App2 from an external server. At step 603 UE A embeds the program logic/link to App2 into a SIP message. At step 604 the SIP message with embedded program logic/link is sent to UE B. The program logic may be installed and executed immediately, or, as shown in Figure 6, UE A may invoke this in UE B by sending a SIP message with a trigger at step 605.

Figure 7 is a flow diagram illustrating the steps in the method of running an application in a UE communicating in a call/session over an IMS network. At step 701 the UE receives a SIP signal that includes program logic, or a link to program logic of the application. In step 702, the UE receives a SIP message with a trigger to installation and execution of the application program logic. At step 703 the UE installs, or follows the link to download and install, the program logic. At step 704 the UE executes the program logic to run the application.

When an application developer analyses the available terminal specifications and APIs s/he does not know what can be assumed about the environment or capabilities of the parties. So, without the mechanisms described above, trying to get, for example, the Usage - Location application of Figure 5 installed on the UEs of all parties that a user might communicate with (e.g. their contacts) would be difficult. This has inhibited the take-up of applications of this type and has meant that developers have had less incentive to build such applications.

However, with the mechanisms described above for delivering and executing program logic, the application can be installed on one device, and then dynamically transferred to the other device, or devices, and executed as part of an IMS session. This means that the developer in this example can write a combined location service application that covers both the originating and terminating part of the location service. The developer can be assured that the application will be automatically deployed on all terminals.

There are several options for implementing the mechanisms described above. For example, one option is to extend the WAC/JIL or WHATWG specifications to allow a more advanced application state model. This would include the dynamic installation and execution of scripts/applications during a telephony session.

Clearly there is a security concern with code being dynamically installed and executed on a UE, possibly without the user being aware. However the JavaScript environment, which is part of WAC/JIL, already provides a sandbox security mechanism to defend against such threats. It is also possible for the dynamic installation/execution to require user acceptance by an input from the user at the receiving UE. This may be tied into the IMS session, making it possible to alert the user and identify the originating party sending the program logic prior to the user's acceptance and installation/execution at the receiving UE.

The mechanisms described above provide the possibility for an application on the device of a calling party in a session to install and invoke execution of program logic on the device of a called party. This remote installation/execution of application logic can be achieved in an simple and secure way (i.e. avoiding viruses), so that a new generation of applications can be developed that will serve all of the parties in an IMS session. The execution of these applications will be carried out as part of the IMS sessions. The application executing on one party's UE will know that the required program logic has been installed on the remote terminal and will be executed at the correct point within the IMS session. Also, applications get distributed between users as they are used/implemented and so the usage and take-up of the application is increased.

## Claims

1. A method of providing application program logic from a first User Equipment (20), UE, to a second UE (22) communicating with each other in a call/session over an IP Multimedia Subsystem, IMS, network, the method comprising:
executing a first application in the first UE (20), the first application including instructions for the first UE (20) to retrieve from a remote server program logic, or program script and/or data to generate the program logic or a link to the program logic, the program logic comprising a second application;
sending the program logic, or link to program logic to the second UE (22); and **characterised by**
sending a trigger to the second UE (22) to install and execute the program logic.

2. The method of claim 1 wherein the generated program logic and/or the trigger are sent to the second UE (22) in one or more Session Initiation Protocol, SIP, messages.

3. The method of any preceding claim wherein the generated program logic and/or the trigger are sent to the second UE (22) during session setup, or at any stage after session set-up.

4. The method of any preceding claim, wherein the program logic and/or the trigger are sent from the first UE (20) to a plurality of second UEs (22) all communicating in the IMS session.

5. The method of any preceding claim wherein the program logic includes logic for interacting with existing capabilities of the second UE (22).

6. The method of claim 5 wherein executing the program logic includes logic for the second UE (22) to access one or more Application Program Interfaces, APIs, installed in the second UE (22).

7. The method of claim 6 wherein the APIs include one or more of: an API for controlling a User Interface, UI, of the UE (42); a SIP API (44) for accessing information about the call/session; and a WEB API for accessing the internet.

8. User Equipment, UE, (20, 22) configured for participating in a call/session via an IP Multimedia Subsystem, IMS, network, the UE (20, 22) comprising an IMS client and an application runtime module (26a, 26b) that executes a first application that includes instructions for the UE (20, 22) to retrieve from a remote server program logic, or program script and/or data to generate the program logic, or a link to the program logic, which program logic comprises a second application, wherein the IMS client is configured to send the generated program logic/link to program logic to another UE (20, 22) in a Session Initiation Protocol, SIP, message, as part of the IMS call/session, and **characterised in that** the IMS client is further configured to send a Session Initiation Protocol, SIP, message to the other UE (20, 22) that includes a trigger for the other UE (20, 22) to install and execute the program logic

## Patentansprüche

1. Verfahren zur Bereitstellung einer Anwendungsprogrammlogik von einer ersten Benutzereinrichtung (20), UE, zu einer zweiten UE (22), die miteinander in einem Anruf/einer Sitzung über ein IP Multimedia Subsystem, IMS, -Netzwerk kommunizieren, wobei das Verfahren Folgendes umfasst:
Ausführen einer ersten Anwendung in der ersten UE (20), wobei die erste Anwendung Anweisungen für die erste UE (20) einschließt, um von einer entfernten Server-Programmlogik oder Programmskript und/oder Daten zum Erzeugen der Programmlogik oder einer Verknüpfung mit der Programmlogik abzurufen, wobei die Programmlogik eine zweite Anwendung umfasst;
Senden der Programmlogik oder Verknüpfen der Programmlogik mit der zweiten UE (22); und **gekennzeichnet durch**
Senden eines Auslösers an die zweite UE (22), um die Programmlogik zu installieren und auszuführen.

2. Verfahren nach Anspruch 1, wobei die erzeugte Programmlogik und/oder der Auslöser in einer oder mehreren SIP-Nachrichten (Session Initiation Protocol) an die zweite UE (22) gesendet werden.

3. Verfahren nach einem der vorstehenden Ansprüche, wobei die erzeugte Programmlogik und/oder der Auslöser während der Sitzungseinrichtung oder zu irgendeinem Zeitpunkt nach der Sitzungseinrichtung an die zweite UE (22) gesendet werden.

4. Verfahren nach einem der vorstehenden Ansprüche, wobei die Programmlogik und/oder der Auslöser von der ersten UE (20) zu einer Vielzahl von zweiten UE (22) gesendet werden, die alle in der IMS-Sitzung kommunizieren.

5. Verfahren nach einem der vorstehenden Ansprüche, wobei die Programmlogik eine Logik zum Interagieren mit vorhandenen Fähigkeiten der zweiten UE (22) einschließt.

6. Verfahren nach Anspruch 5, wobei das Ausführen der Programmlogik eine Logik für die zweite UE (22) einschließt, um auf eine oder mehrere Anwendungsprogrammschnittstellen (APIs) zuzugreifen, die in der zweiten UE (22) installiert sind.

7. Verfahren nach Anspruch 6, wobei die APIs eines oder mehrere der Folgenden einschließen: eine API zur Steuerung einer Benutzerschnittstelle, UI, der UE (42); eine SIP-API (44) für den Zugriff auf Informationen über den Anruf/die Sitzung; und eine WEB-API für den Zugriff auf das Internet.

8. Benutzereinrichtung, UE, (20, 22) konfiguriert für die Teilnahme an einem Anruf/einer Sitzung über ein IP-Multimedia-Subsystem, IMS, Netzwerk, wobei die UE (20, 22) einen IMS-Client und ein Anwendungslaufzeitmodul (26a, 26b) umfasst, das eine erste Anwendung ausführt, die Anweisungen für die UE (20, 22) zum Abrufen einer Programmlogik oder eines Programmskripts von einem entfernten Server und/oder Daten zur Erzeugung der Programmlogik oder eine Verknüpfung zur Programmlogik, die eine zweite Anwendung umfasst, einschließt, wobei der IMS-Client konfiguriert ist, um die erzeugte Programmlogik/Verknüpfung zur Programmlogik an eine andere UE (20, 22) in einer SIP-Nachricht (Session Initiation Protocol) als Teil des IMS-Anrufs/der Sitzung zu senden, und **dadurch gekennzeichnet ist, dass** der IMS-Client weiter konfiguriert ist, um eine SIP (Session Initiation Protocol) -Nachricht an die andere UE (20, 22) zu senden, die einen Auslöser für die andere UE (20, 22) zum Installieren und Ausführen der Programmlogik einschließt.

## Revendications

1. Procédé de fourniture d'une logique de programme d'application d'un premier Équipement d'Utilisateur (20), UE, à un second UE (22) communiquant l'un avec l'autre dans un appel/une session via un réseau de Sous-système Multimédia IP, IMS, le procédé comprenant :
l'exécution d'une première application dans le premier UE (20), la première application incluant des instructions pour que le premier UE (20) récupère d'un serveur distant une logique de programme, ou un script de programme et/ou des données afin de générer la logique de programme ou une liaison avec la logique de programme, la logique de programme comprenant une seconde application ;
l'envoi de la logique de programme, ou de la liaison avec la logique de programme au second UE (22) ; et
**caractérisé par**
l'envoi d'un déclencheur au second UE (22) pour installer et exécuter la logique de programme.

2. Procédé selon la revendication 1, dans lequel la logique de programme générée et/ou le déclencheur est ou sont envoyés au second UE (22) dans un ou plusieurs messages de Protocole d'Initiation de Session, SIP.

3. Procédé selon l'une quelconque des revendications précédentes, dans lequel la logique de programme générée et/ou le déclencheur est ou sont envoyés au second UE (22) au cours de l'établissement de la session, ou à n'importe quel stade après l'établissement de la session.

4. Procédé selon l'une quelconque des revendications précédentes, dans lequel la logique de programme et/ou le déclencheur est ou sont envoyés du premier UE (20) à une pluralité de seconds UE (22) communiquant tous dans la session d'IMS.

5. Procédé selon l'une quelconque des revendications précédentes, dans lequel la logique de programme inclut une logique pour interagir avec des capacités existantes du second UE (22).

6. Procédé selon la revendication 5, dans lequel l'exécution de la logique de programme inclut une logique pour faire accéder le second UE (22) à une ou plusieurs Interfaces de Programme d'Application, API, installées dans le second UE (22).

7. Procédé selon la revendication 6, dans lequel les API incluent une ou plusieurs d'une API pour commander une Interface d'Utilisateur, UI, de l'UE (42) ; une API SIP (44) pour accéder à des informations sur l'appel/la session ; et une API WEB pour accéder à l'Internet.

8. Équipement d'Utilisateur, UE, (20, 22) configuré pour participer à un appel/une session via un réseau de Sous-système Multimédia IP, IMS, l'UE (20, 22) comprenant un client d'IMS et un module d'exécution d'application (26a, 26b) qui exécute une première application qui inclut des instructions pour que l'UE (20, 22) récupère d'un serveur distant une logique de programme, ou un script de programme et/ou des données afin de générer la logique de programme, ou une liaison avec la logique de programme, laquelle logique de programme comprend une seconde application, dans lequel le client d'IMS est configuré pour envoyer la logique de programme générée/la liaison avec la logique de programme à un autre UE (20, 22) dans un message de Protocole d'Initiation de Session, SIP, en tant que partie de l'appel/la session d'IMS, et **caractérisé en ce que** le client d'IMS est en outre configuré pour envoyer un message de Protocole d'Initiation de Session, SIP, à l'autre UE (20, 22) qui inclut un déclencheur pour que l'autre UE (20, 22) installe et exécute la logique de programme.
